# NEUE EUROPÄISCHE PATENTSCHRIFT

(11) **EP 1 289 736 B2**
(45) Veröffentlichungstag und Bekanntmachung des Hinweises auf die Entscheidung über den Einspruch: **30.07.2008**
(45) Hinweis auf die Patenterteilung: 15.06.2005
(21) Anmeldenummer: 01962720.7
(22) Anmeldetag: 07.06.2001
(51) Int. Cl.: B29C 67/00

(54) **VERFAHREN UND VORRICHTUNG ZUR HERSTELLUNG EINES WERKSTÜCKS MIT EXAKTER GEOMETRIE**
METHOD AND DEVICE FOR PRODUCING A WORKPIECE WITH EXACT GEOMETRY
PROCEDE ET DISPOSITIF POUR FABRIQUER UNE PIECE A GEOMETRIE DE PRECISION

(30) Priorität: 07.06.2000 DE 10028063
(43) Veröffentlichungstag der Anmeldung: 12.03.2003
(73) Patentinhaber: BU:ST GmbH Beratungsunternehmen für Systeme und Technologien, 80799 München (DE)
(72) Erfinder: LOHNER, Andreas, 85640 Putzbrunn (DE); SIEVERS, Tim, 80639 München (DE)
(74) Vertreter: Jehle, Volker Armin
(86) Internationale Anmeldenummer: PCT/EP2001/006476
(87) Internationale Veröffentlichungsnummer: WO 2001/094100

(56) Entgegenhaltungen:
- DE-A- 4 422 146
- DE-A- 19 533 960
- DE-C- 19 841 892
- DE-C1- 19 853 978
- US-A- 6 144 008
- Werkstatt und Betrieb 129(1996) 5, Seite 390
- Maschinenmarkt, Wuerzburg, 102(1996) 3, Seite 42
- Auszuege aus der Bedienungsanleitung EOSINT M 250Xtended EOS GmbH Electro Optical Systems, 1999, Kapitel 5 und 7

## Beschreibung

Die Erfindung bezieht sich auf ein Verfahren zur Herstellung eines Werkstückes mit exakter Geometrie und hoher Oberflächengüte, insbesondere eines Formwerkzeuges durch aufeinanderfolgendes Verfestigen von schichtweise aufgetragenem pulverförmigem Ausgangsmaterial mittels elektromagnetischer Strahlung oder Teilchenstrahlung und durch nachfolgende mechanische Feinbearbeitung der Oberflächen sowie eine Vorrichtung zur Herstellung eines Werkstücks gemäß dem Oberbegriff des Patentanspruchs 8.

Ein Verfahren und eine Vorrichtung der vorbezeichneten Art ist aus der DE-A-195 33 960 bekannt. Bei dem vorbekannten Verfahren und vorrichtung wird jeweils eine Materialschicht in Form einer Spur auf einer Unterlage aufgebracht und danach mittels Laserstrahl aufgeschmolzen bzw. verfestigt. Danach wird eine zweite Schicht aufgebracht und verfestigt usw., wobei sich die Anzahl der aufgebrachten und jeweils mittels Laserstrahl verfestigten Schichten nach der gewünschten Höhe des Werkstücks richtet. Jeweils beim Aufbringen einer neuen Schicht verbindet sich diese mit der Oberfläche der vorher aufgebrachten Schicht. Nach der pulvermetallurgischen Herstellung des Werkstücks erfolgt eine Feinbearbeitung sowohl der Seitenflächen als auch der Oberfläche mittels spanabhebender Bearbeitung. Es wird bei dem bekannten Verfahren darauf geachtet, dass ungeschmolzenes Pulver jeweils aus dem Arbeitsbereich durch Wegblasen oder Absaugen entfernt wird.

Mit dem bekannten Herstellungsverfahren können vergleichsweise kurze Herstellzeiten für exakt dimensionierte Werkstücke erzielt werden wenn die Strahlungsvorrichtung und die mechanische Bearbeitungsvorrichtung rechnergestützt gesteuert werden. Ein Problem des bekannten Herstellungsverfahrens besteht darin, dass im Randbereich der hergestellten Werkstücke, d. h. also im Bereich der Seitenflächen ungleichförmige Materialkonsistenz entsteht, insbesondere Porositäten auftreten können. Zur Lösung dieses Problems wird in der eingangs genannten Druckschrift vorgeschlagen, Material über die gewünschte Konturgröße hinaus aufzuschmelzen und die deutlich überstehenden Werkstückränder mittels der nachfolgenden mechanischen Bearbeitung abzuarbeiten. Mit dieser Vorgehensweise kann zwar im Bereich der Seitenflächen soviel Material abgearbeitet werden, dass man bis auf eine homogene Materialbeschaffenheit kommt; dadurch wird allerdings der Bearbeitungsaufwand sowohl was die Bearbeitungszeit als auch die Werkzeugkosten anlangt, unerwünscht hoch.

Aus der DE 198 41 892 ist ein Verfahren und eine Vorrichtung zur Herstellung von Werkstücken der eingangs beschriebenen Art bekannt. Das Werkstück wird aus Metallpulver aufgebaut, wobei die Metallpulverzuführeinrichtung mit einem Laser verbunden ist. Während der Zuführung des Metallpulvers mittels einer Düse wird das Metallpulver durch den Laser aufgeschmolzen und auf die jeweilige dafür vorgesehene Schicht aufgebracht. Das Werkstück wird somit schichtweise aufgebaut, wobei der jeweils hergestellte Abschnitt des Werkstücks von Metallpulver umgeben ist. Die für die Fertigstellung des Werkstücks notwendige Feinbearbeitung der Außenkontur findet entweder nach der Entnahme des Werkstücks aus der Vorrichtung statt oder wird gegebenenfalls nach dem Aufbringen mehrerer Schichten vorgenommen. Eine Kombination des Herstellungsprozesses des Werkstücks mit deren Nachbearbeitung ist indes nicht möglich oder vorgesehen.

Aus der DE 44 22 146 A1 ist ein Verfahren und eine Einrichtung zum Aufbauen eines Werkstücks mit thermoplastischem Kunststoff durch Auftrag-Extrusionsschweißen bekannt. Der Aufbau des Werkstücks erfolgt zwar durch schichtweisen Aufbau, jedoch mittels eines thermoplastischen Kunststoffs oder mittels schichtweises Abtragen durch Fräsen aus einem Massivblock. Eine Feinbearbeitung erfolgt daher erst nach Fertigstellung aller Schichten des Werkstücks.

Aus der US 6,144,008 ist ein System zum Herstellen von Werkstücken bekannt. Ausgangsmaterial für die Herstellung des Werkstücks ist ein Metalldraht, der durch eine Öffnung einem Laser zugeführt wird, um von diesem geschmolzen zu werden. Es erfolgt ebenfalls ein schichtweiser Aufbau des Werkstücks, wobei das Werkstück hierzu auf einer beweglichen Platte aufgebracht ist, die über mehrere Freiheitsgrade bewegt werden kann. Nach erfolgtem Aufbau des Werkstücks findet gegebenenfalls ein Feinbearbeiten der Außenkontur statt.

Aufgabe der vorliegenden Erfindung ist es deshalb, ein Verfahren und eine Vorrichtung der eingangs genannten Art anzugeben, bei dem die mechanische Feinbearbeitung der Oberflächen, was die Menge des Materialabtrags anlangt, minimiert wird und gleichzeitig hervorragende Oberflächenqualität, wie sie insbesondere bei Formwerkzeugen verlangt wird, erreichbar ist.

Erfindungsgemäß wird die gestellte Aufgabe durch das Verfahren nach Patentanspruchs 1 und durch die Vorrichtung nach Patentanspruch 8 gelöst.

Vorteilhafte Weiterbildungen der Erfindung sind Gegenstand der abhängigen Ansprüche.

Vorzugsweise wird dieses Verfahrensmerkmal dadurch erzielt, dass das pulverförmige Ausgangsmaterial in Schichtstärke auf einer Unterlage über eine Fläche, welche über die Werkstückkontur hinausreicht, aufgebracht wird und die Verfestigung spurenweise erfolgt, wobei die Spurbreite der Wirkungsbreite der Strahlung entspricht. Auf diese Weise ist es möglich, durch exakte Steuerung des Verfestigungsstrahles, sei es nun ein elektromagnetischer Strahl oder ein Teilchenstrahl, die Materialeigenschaften im Bereich der Randkontur des Werkstücks einzustellen.

Es ist bekannt, dass mit zunehmender Strahlleistung bzw. eingebrachter Energie pro Flächeneinheit sich der Anteil an schmelzflüssiger Phase des Materials erhöht, was zu einer hohen Verdichtung des Materials und damit zu guten mechanischen Eigenschaften führt. Im unmittelbaren Randbereich des Bauteils, d. h. im Bereich der seitlichen Oberfläche wird jedoch eine solche Verfestigung des pulverförmigen Materials auch zu erhöhter Porosität führen und damit zu einer Materialstruktur, die trotz späterer mechanischer Nachbearbeitung nicht die gewünschte hohe Flächengüte ergibt. Wird nun entsprechend einer bevorzugten Ausführungsform des erfindungsgemäßen Verfahrens die Verfestigung in den Randbereichen des Werkstücks durch wiederholte Bestrahlung derselben Pulverschicht erreicht, so lässt sich in einer nachfolgenden Bestrahlung Pulver aus dem nach wie vor vorhandenen Pulverbett im Bereich der Randkontur des Werkstücks in minimaler Stärke mit geringerer Strahlintensität verfestigen. Dadurch kann die nachfolgende mechanische Feinbearbeitung gering gehalten werden. Vorzugsweise erfolgt die erste Bestrahlung mit hoher Energiedichte so, dass die Wirkungsbreite der Bestrahlung gerade innerhalb entlang der Endkonturlinie des Werkstücks verläuft und eine zweite Bestrahlung gegenüber der ersten nach aussen versetzt ist und die gewünschte Endkontudinie des Werkstücks überdeckt.

Besonders vorteilhaft im Sinne der Aufgabenstellung ist es, wenn die mechanische Feinbearbeitung der Seitenflächen des Werkstücks in umgebendem pulverförmigem Ausgangsmaterial erfolgt. Hierbei wird das umliegende Pulver, nämlich sowohl als Schleifmittel als auch als Füllmittel für die noch vorhandene Porosität im Bereich der seitlichen Oberflächen eingesetzt. Pulverpartikel werden insoweit zum Auffüllen der Poren durch Kaltverschweißung als auch als Schleifmittel zur Entfernung überstehender, bereits durch den Energiestrahl verfestigter, gebundener Partikel verwendet. Es hat sich gezeigt, dass dadurch minimale mechanische Bearbeitungsstiefen ausreichen, die wiederum hohe Vorschubgeschwindigkeiten zulassen. Besonders vorteilhaft werden die geschilderten Effekte des umgebenden Materialpulvers dann erzielt, wenn die mechanische Feinbearbeitung eine Wälzfräsbearbeitung oder eine Umfangsschleifbearbeitung ist

Eine weitere Verbesserung der Oberflächengüte ohne Erhöhung der notwendigen Bearbeitungszeit besteht darin, dass die mechanische Feinbearbeitung der Seitenflächen jeweils mehrere der zuletzt aufgebrachten Materialschichten (Schicht n bis Schicht n-x) erfasst. Dies führt im Ergebnis dazu, dass die Seitenfläche jeder Schicht, die letztendlich die seitliche Oberfläche des Werkstücks bildet, mehrfach mechanisch bearbeitet wird.

Anhand der beigefügten Zeichnungen wird das erfindungsgemäße Verfahren und die erfindungsgemäße Vorrichtung beispielhaft erläutert. In den Zeichnungen zeigt:
- Fig. 1: eine schematische Darstellung einer erfindungsgemäßen Vorrichtung zur Durchführung des erfindungsgemäßen Verfahrens und
- Fig. 2: eine Draufsicht auf ein herzustellendes Werkstück mit schematischer Darstellung der Pulververfestigung und der mechanischen Feinbearbeitung.

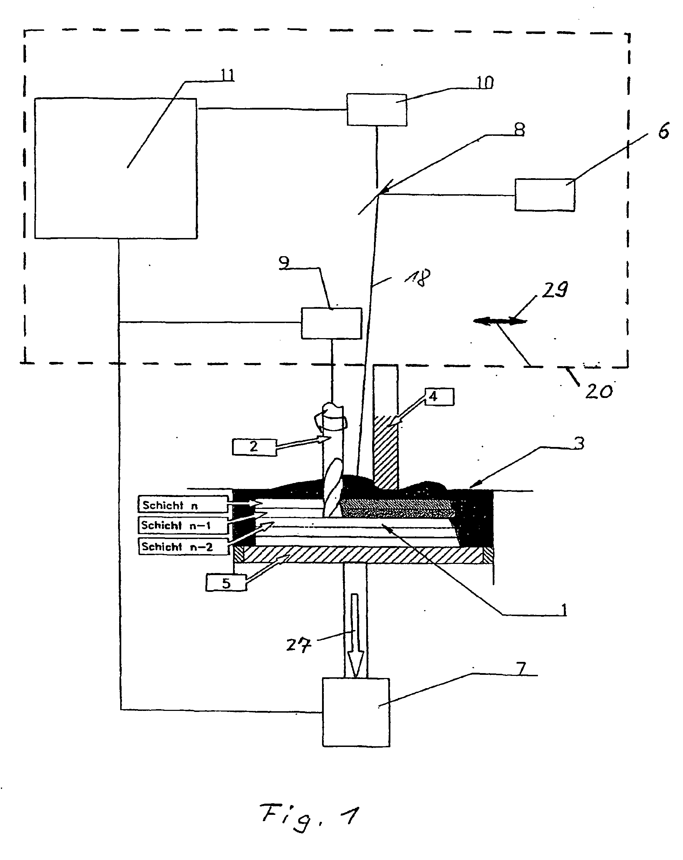

In der Anordnung nach Fig. 1 ist das herzustellende Werkstück mit 1 bezeichnet. Die Herstellung erfolgt in der Weise, dass auf einem Arbeitstisch 5, der mittels einer Hubvorrichtung 7 entsprechend der Pfeilrichtung 27 vertikal auf- und abfahrbar ist, pulverförmiges Ausgangsmaterial 3 in einer genau festgelegten Schichtstärke s aufgebracht wird. Die Ausgangsschichtstärke ist gleich der mit der Schicht n, Schicht n-1 oder Schicht n-2 in der Skizze dargestellten Schichtstärke. Die Fläche des aufgebrachten pulverförmigen Ausgangsmaterials muß dabei über die gewünschte Werkstückendkontur hinausreichen.

Oberhalb des Arbeitstisches 5 ist eine Bearbeitungseinheit 20 angeordnet, die in ihrer Gesamtheit entsprechend Pfeilrichtung 29 sowie vorzugsweise senkrecht zur Zeichenebene bewegbar ist. Die Bewegung der Bearbeitungseinheit 20 wird rechnergestützt gesteuert von einem Steuergerät 11, welches auch gleichzeitig die Hubbewegung des Arbeitstisches 5 ansteuert. Die Bearbeitungseinheit 20 umfasst im wesentlichen eine Strahlenquelle 6, einen oder mehrere von einer Betätigungseinheit 10 betätigten Spiegel oder eine vergleichbare Lenkeinrichtung für den aus der Bestrahlungsquelle 6 austretenden Strahl 18, um diesen durch Zweikoordinatenansteuerung entsprechend der gewünschten Bauteilkontur auf dem Arbeitstisch 5 zu lenken. Zusätzlich zur Bestrahlungseinrichtung 6, 8, 10 umfasst die Bearbeitungseinheit 20 noch eine Bearbeitungsvorrichtung zur mechanischen Feinbearbeitung. Im gezeigten Ausführungsbeispiel handelt es sich dabei um ein Fräswerkzeug 2 mit entsprechender Antriebseinheit 9, die ebenfalls von der Steuereinheit 11 angesteuert wird. Schließlich ist an der Bearbeitungseinheit 20 noch eine Abrichtleiste 4 vorgesehen, mit der pulverförmiges Ausgangsmaterial 3, das auf denArbeitstisch 5 gebracht wurde, durch Querbewegung der Bearbeitungseinheit 20 relativ zum Arbeitstisch 5 in konstanter Schichtstärke verteilt werden kann. Die Abrichtleiste 4 kann gleichzeitig als Zuführvorrichtung für das pulverförmige Ausgangsmaterial 3 ausgebildet sein.

Nach dem Aufbringen der ersten Schicht des pulverförmigen Ausgangsmaterials 3 auf den Arbeitstisch 5 wird durch entsprechende Steuerung des Strahles 18 und nach Bedarf zusätzlich durch Relativbewegung der Bearbeitungseinheit 20 zum Arbeitstisch 5 und das Ausgangsmaterial in einer gewünschten Spur verfestigt. Der Bestrahlung und Verfestigung des pulverförmigen Ausgangsmaterials folgend kann das Fräswerkzeug 2, welches eine Wälzfräsbearbeitung ausführt, mit den der Endkontur des Werkstückes entsprechenden Bewegungskoordinaten den seitlichen Rand der ersten verfestigten Materialschicht bearbeiten. Mit Herstellung der zweiten Schicht wird das Fräswerkzeug 2 in seiner Höhe so justiert, dass jeweils die beiden zuletzt erzeugten Materialschichten seitlich fein bearbeitet werden. Anstelle nur der beiden zuletzt aufgebrachten Schichten kann das Werkzeug auch so eingestellt werden, dass es mehrere Schichten erfasst; allerdings wird dadurch die notwendige freie Werkzeugschaftlänge größer, weshalb die Zahl der erfassten Schichten und damit die Zahl der Mehrfachbearbeitungen jeder einzelnen Schicht begrenzt sein sollte. Nach dem Arbeitsschritt der Bestrahlung und Verfestigung der Materialschicht und der eventuellen Nachbearbeitung wird die nächste Schicht von pulverförmigen Ausgangsmaterial über die Abrichtleiste 4 bzw. die Zuführvorrichtung aufgebracht. Anschließend findet die Verfestigung der nächsten Materialschicht oder -schichten statt. Jeweils nach einer aufgebrachten und verfestigten Schicht wird mittels der Hubvorrichtung 7 der Arbeitstisch 5 um eine Schichthöhe abgesenkt. Durch die Zweikoordinatensteuerung des Verfestigungsstrahles und gegebenenfalls der Bearbeitungseinheit 20 lassen sich sehr kompliziert geformte Werkstücke ausbilden, insbesondere solche Werkstücke mit sehr tiefen Einschnitten bzw. Nuten.

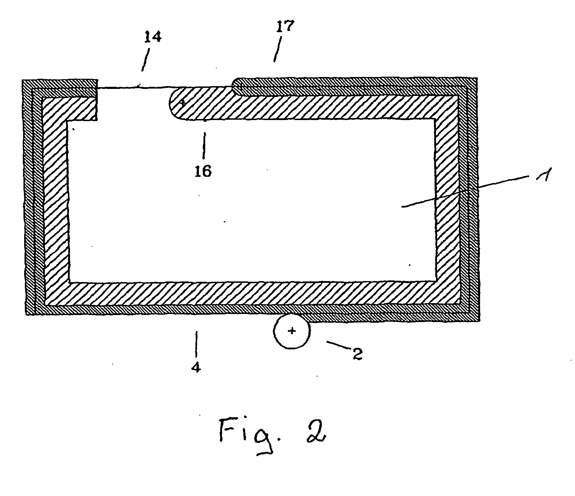

Die Draufsicht gemäß Figur 2 veranschaulicht die Erzeugung des Randbereichs eines im wesentlichen rechteckige Kontur aufweisenden Werkstücks. Das Werkstück soll eine Endkonturlinie 14 aufweisen. Um hohe Oberflächengüte der seitlichen Oberflächen entsprechend der Endkonturlinie 14 zu erhalten, wird der Randbereich des Werkstücks wiederholt bestrahlt und eine erste Bestrahlung erfolgt entsprechend der eingezeigten Spur 16 mit hoher Energiedichte, wobei die Wirkungsbreite der Bestrahlung also die Spurbreite innerhalb der Endkonturlinie 14 verläuft. Eine zweite Bestrahlung mit vorzugsweise geringerer Energiedichte, entsprechend der Spur 17, ist gegenüber der ersten nach außen versetzt und überdeckt die gewünschte Endkonturlinie 14 des Werkstücks. Die Verfestigungsspur 17 ist dabei deutlich schmäler als die erste Spur 16. Aufgrund der geringen Energiedichte in der Spur 17 braucht diese nur minimal über die Endkonturlinie 14 hinauszureichen, um anschließend mittels der Wälzfräsbearbeitung die durch die Darstellung des Fräswerkzeugs 2 angedeutet ist eine sehr hohe Oberflächengüte der Seitenfläche entlang der Endkonturlinie 14 zu erzielen. Die gleichen Verhältnisse wären erreichbar bei schmalen Nuten oder Einsenkungen im mittleren Bereich des Werkstücks 1.

Abschließend kann nach Aufbringung und Verfestigung der obersten Materialschicht eine mechanische Feinbearbeitung der Deckfläche(n) des Werkstückes erfolgen.

## Patentansprüche

1. Verfahren zur Herstellung eines Werkstücks durch aufeinanderfolgendes Verfestigen von schichtweise horizontal aufgetragenem pulverförmigen Ausgangsmaterial (3) mittels elektromagnetischer Strahlung oder Teilchenstrahlung, wobei jede Schicht zwei im wesentlichen vertikale Seitenflächen und eine im wesentlichen horizontale Oberseite aufweist, die ihrerseits die Grundlage für eine etwaige nachfolgende Schicht bildet, **dadurch gekennzeichnet, daß** die zwei im wesentlichen vertikalen Seitenflächen, die einen Teilbereich der Außenkontur des Werkstücks bilden im Anschluß an die Verfestigung des schichtweise horizontal aufgetragenen pulverförmigen Ausgangsmaterials (3) eine mechanische Feinbearbeitung erfahren und das zu bildende Werkstück (1) während seiner Herstellung von pulverförmigem Ausgangsmaterial (3) umgeben ist, wobei die mechanische Feinbearbeitung in umgebendem pulverförmigen Ausgangsmaterial erfolgt.

2. Verfahren nach Anspruch 1, **dadurch gekennzeichnet, dass** das pulverförmige Ausgangsmaterial (3) in Schichtstärke auf einer Unterlage über eine Fläche, welche über die Werkstückkontur hinausreicht, aufgebracht wird und die Verfestigung spurenweise erfolgt, wobei die Spurbreite der Wirkungsbreite der Strahlung (18) entspricht.

3. Verfahren nach Anspruch 1 oder Anspruch 2, **dadurch gekennzeichnet, dass** die Verfestigung in den Randbereichen des Werkstücks durch wiederholte Bestrahlung derselben Pulverschicht erfolgt.

4. Verfahren nach Anspruch 3, **dadurch gekennzeichnet, dass** eine erste Bestrahlung mit hoher Energiedichte so erfolgt, dass die Wirkungsbreite der Bestrahlung gerade innerhalb entlang der Endkonturlinie (14) des Werkstückes verläuft und eine zweite Bestrahlung gegenüber der ersten nach aussen versetzt ist und die gewünschte Endkonturlinie (14) des Werkstücks überdeckt.

5. Verfahren nach einem der vorhergehenden Ansprüche, **dadurch gekennzeichnet, dass** die mechanische Feinbearbeitung der Seitenflächen in umgebendem pulverförmigem Ausgangsmaterial (3) erfolgt.

6. Verfahren nach einem der vorhergehenden Ansprüche, **dadurch gekennzeichnet, dass** die Bearbeitung eine Wälzfräsbearbeitung oder eine Umfangsschleifbearbeitung (Werkzeug 2) ist.

7. Verfahren nach einem der vorhergehenden Ansprüche, **dadurch gekennzeichnet, dass** die mechanische Feinbearbeitung der Seitenflächen (24) jeweils mehrere der zuletzt aufgebrachten Materialschichten (Schicht n bis Schicht n-x) erfasst.

8. Vorrichtung zur Herstellung eines Werkstücks bestehend aus einer Bearbeitungseinheit (20), die vertikal und horizontal bewegbar ausgebildet ist und mit einem Steuergerät (11) wirktechnisch in Verbindung bringbar ist, wobei die Bearbeitungseinheit (20) mindestens eine Strahlungsquelle (6) und mindestens einen, durch eine Betätigungseinheit (10) steuerbare Spiegeleinheit (8) umfaßt, so daß ein aus der Strahlungsquelle (6) austretender Strahl (18) über die mindestens eine über eine Zweikoordinatensteuerung steuerbare Spiegeleinheit (8) entsprechend einer gewünschten Bauteilkontur auf den Arbeitstisch (5) lenkbar ist, **dadurch gekennzeichnet, daß** die Bearbeitungseinheit weiterhin eine Bearbeitungsvorrichtung zum mechanischen Feinbearbeiten von im wesentlichen vertikalen Flächen aufweist und der Arbeitstisch (5) absenkbar ausgebildet und mit einem pulverförmigen Ausgangsmaterial (3) bedeckbar ist, welches das zu bildende Werkstück während seiner Herstellung umgibt, wobei die Bearbeitungsvorrichtung so ausgebildet ist, daß die mechanische Feinbearbeitung in umgebendem pulverförmigen Ausgangsmaterial erfolgt.

## Claims

1. A method for manufacturing a work piece by the successive consolidation of powdered starting material (3) applied horizontally in layers by means of electromagnetic radiation or particle radiation, wherein each layer comprises two substantially vertical side faces and one substantially horizontal upper side which in turn forms the basis for a possible following layer, **characterized in that** the two substantially vertical side faces forming a partial area of the outer contour of the work piece experience, following the consolidation of the powdered starting material (3) applied horizontally in layers, a mechanical finishing, and that the work piece (1) to be formed is surrounded by powdered starting material (3) during the manufacturing thereof, wherein the mechanical finishing is performed in surrounding powdered starting material.

2. The method according to claim 1, **characterized in that** said powdered starting material (3) is applied in layer strength on a base across an area extending beyond the work piece contour, and that the consolidation is performed in traces, wherein the track width corresponds to the width of effect of the radiation (18).

3. The method according to claim 1 or claim 2, **characterized in that** the consolidation in the edge regions of the work piece is performed by repeated irradiation of the same powder layer.

4. The method according to claim 3, **characterized in that** a first irradiation with a high energy density is performed such that the width of effect of the irradiation extends exactly inside along the end contour line (14) of the work piece, and that a second irradiation is displaced outwardly vis-à-vis the first one and covers the desired end contour line (14) of the work piece.

5. The method according to any of the preceding claims, **characterized in that** the mechanical finishing of the side faces is performed in surrounding powdered starting material (3).

6. The method according to any of the preceding claims, **characterized in that** the processing is hobbing processing or peripheral grinding processing (tool 2).

7. The method according to any of the preceding claims, **characterized in that** the mechanical finishing of the side faces (24) respectively covers a plurality of the material layers that have been applied last (layer n to layer n-x).

8. A device for manufacturing a work piece, consisting of a processing unit (20) that is designed to be moved vertically and horizontally and to be connected operatively with a control device (11), wherein said processing unit (20) comprises at least one radiation source (6) and at least one mirror unit (8) adapted to be controlled by an actuating unit (10), so that a beam (18) emanating from said radiation source (6) is adapted to be guided on the work table (5) in correspondence with a desired component contour via said at least one mirror unit (8) adapted to be controlled via a two-coordinate control, **characterized in that** said processing unit further comprises a processing device for the mechanical finishing of substantially vertical faces, and that said work table (5) is designed to be lowered and to be covered by a powdered starting material (3) that surrounds the work piece to be formed during the manufacturing thereof, wherein the processing device is designed such that the mechanical finishing is performed in surrounding powdered starting material.

## Revendications

1. Procédé de fabrication d'une pièce par solidification par étapes successives, à l'aide de rayonnement électromagnétique ou corpusculaire, d'un matériau de départ (3) se présentant sous forme de poudre et appliqué en couches horizontales, chaque couche présentant deux surfaces latérales essentiellement verticales et une surface supérieure essentiellement horizontale qui constitue elle-même une base pour une éventuelle couche subséquente, **caractérisé en ce que** les deux surfaces latérales essentiellement verticales, qui constituent une partie du contour extérieur de la pièce, sont soumises à un usinage mécanique de précision après solidification du matériau de départ (3) sous forme de poudre et appliqué en couches horizontales, et **en ce que** la pièce (1) à former est entourée pendant sa fabrication du matériau de départ sous forme de poudre (3), l'usinage mécanique de précision étant effectué dans le matériau de départ se présentant sous forme de poudre environnant.

2. Procédé selon la revendication 1, **caractérisé en ce que** le matériau de départ (3) sous forme de poudre est appliqué en couches d'une certaine épaisseur sur un support, en couvrant une surface qui dépasse les contours de la pièce, et **en ce que** la solidification est effectuée trace par trace, la largeur d'une trace correspondant à la largeur d'action du rayonnement (18).

3. Procédé selon la revendication 1 ou la revendication 2, **caractérisé en ce que** la solidification au niveau des bords de la pièce se produit par irradiation répétée de la même couche de poudre.

4. Procédé selon la revendication 3, **caractérisé en ce qu'**une première irradiation se produit avec une densité d'énergie élevée de telle sorte que la largeur d'action de l'irradiation suit exactement la ligne du contour final (14) de la pièce, par l'intérieur, et qu'une deuxième irradiation, décalée vers l'extérieur par rapport à la première, recouvre la ligne souhaitée du contour final (14) de la pièce.

5. Procédé selon l'une quelconque des revendications précédentes, **caractérisé en ce que** l'usinage mécanique de précision des surfaces latérales est effectué dans le matériau de départ (3) sous forme de poudre environnant.

6. Procédé selon l'une quelconque des revendications précédentes, **caractérisé en ce que** l'usinage consiste en un taillage par fraise-mère ou une rectification périphérique (outil 2).

7. Procédé selon l'une quelconque des revendications précédentes, **caractérisé en ce que** l'usinage mécanique de précision des surfaces latérales (24) inclut respectivement plusieurs couches de matériau parmi celles appliquées en dernier (couche n à couche n-x).

8. Dispositif de fabrication d'une pièce, constitué d'une unité d'usinage (20) qui est conçue de manière à pouvoir se déplacer verticalement et horizontalement et qui peut être reliée techniquement à un appareil de commande (11), l'unité d'usinage (20) comprenant au moins une source de rayonnement (6) et au moins une unité réfléchissante (8) pouvant être pilotée par une unité de commande (10) de telle sorte qu'un rayon (18) provenant de la source de rayonnement (6) peut, par le biais d'au moins cette unité réfléchissante (8) pouvant être pilotée par une commande avec deux coordonnées, être orienté sur la table de travail (5) selon un contour désiré de pièce, **caractérisé en ce que** l'unité d'usinage présente également un dispositif d'usinage pour l'usinage mécanique de précision de surfaces essentiellement verticales, et **en ce que** la table de travail (5) est conçue de manière à pouvoir être abaissée et peut être recouverte d'un matériau de départ (3) sous forme de poudre qui entoure la pièce à former pendant sa fabrication, le dispositif d'usinage étant conçu de sorte que l'usinage mécanique de précision est effectué dans le matériau de départ sous forme de poudre environnant.
